# EUROPÄISCHE PATENTANMELDUNG

(11) **EP 0 816 056 A2**
(43) Veröffentlichungstag der Anmeldung: **07.01.1998**
(21) Anmeldenummer: 97109736.5
(22) Anmeldetag: 14.06.1997
(51) Int. Cl.: B29D 28/00, B29C 47/12

(54) **Netz, insbesondere Oberflächenschutznetz, Rutschhemmnetz, Abstandshalternetz oder dergleichen sowie Verfahren zur Herstellung desselben**

(30) Priorität: 26.06.1996 DE 19625472
(71) Anmelder: Norddeutsche Seekabelwerke GmbH, 26954 Nordenham (DE)
(72) Erfinder: Basse, Hartwig, 26954 Nordenham (DE); Bittner, Hans Joachim, 26919 Brake (DE)
(74) Vertreter: Möller, Friedrich, Dipl.-Ing.

(57) **Zusammenfassung**

In der Praxis werden zum Schutz von gestapelten oder nebeneinander angeordneten Gütern Zweischicht-Netze verwendet, die aufgrund ihres Aufbaus sehr materialintensiv sind und eine große Berührungsfläche mit den zu schützenden Gütern aufweisen. Auch die Herstellung derartiger Zweischicht-Netze ist sehr aufwendig.

Erfindungsgemäß ist der Aufbau des Netzes (10) dadurch vereinfacht, daß die rutschhemmenden Mittel als mindestens auf einer Seite des Trägernetzes (11) aufgebrachte Stränge (15, 16) ausgebildet sind. Dadurch ist zum einen der Materialaufwand und damit der Kostenaufwand reduziert. Des weiteren ist durch die Ausbildung der rutschhemmenden Mittel als Stränge (15, 16) die Berührungsfläche des Netzes (10) mit den zu schützenden Gütern verkleinert, so daß Riefen Kratzer oder dergleichen durch Schmutzpartikelchen vermieden werden.

Die erfindungsgemäßen Netze (10) eignen sich besonders als Zwischenlage zum Schutz von empfindlichen Gütern, beispielsweise Glasscheiben.

## Beschreibung

Die Erfindung betrifft ein Netz, insbesondere Oberflächenschutznetz, Rutschhemmnetz, Abstandshalternetz oder dergleichen, gemäß den Oberbegriffen der Ansprüche 1, 9 und 14 sowie Verfahren zur Herstellung derselben gemäß den Oberbegriffen der Ansprüche 7 und 12.

Derartige Netze werden überwiegend zum Schutz und zur Lagesicherung von gestapelten und/oder nebeneinander angeordneten Gütern eingesetzt. Aus den Netzen werden Zwischenlagen gebildet, die ein Verrutschen und Berühren der Güter verhindern und somit einen wirksamen Schutz der Güter gegen Kratzer, Riefen, Dellen oder dergleichen sicherstellen.

Es ist bereits ein rutschhemmendes Zweischicht-Netz bekannt, bei dem zwei Netze übereinander angeordnet sind. Auf einem ersten, grobmaschigen Trägernetz ist ein zweites, feinmaschiges Netz aus rutschhemmendem Material aufgebracht. Das aus den beiden Netzen bestehende Zweischicht-Netz weist den Nachteil auf, daß der Materialaufwand und der damit verbundene Kostenaufwand durch die Überlagerung zweier Netze hoch ist.

Das Verfahren zur Herstellung derartiger Netze ist sehr aufwendig, da sowohl das Trägernetz als auch das rutschhemmende Netz jeweils separat gefertigt und erst anschließend miteinander verbunden werden.

Der Erfindung liegt die Aufgabe zugrunde, ein Netz mit vereinfachtem Aufbau und verbesserten Schutzeigenschaften sowie ein Verfahren zur Herstellung desselben zu schaffen.

Zur Lösung dieser Aufgabe weist das erfindungsgemäße Netz die Merkmale des Anspruchs 1 auf. Dadurch, daß die rutschhemmenden Mittel als mindestens auf einer Seite des Trägernetzes aufgebrachte Stränge ausgebildet sind, ist der Materialaufwand und damit der Kostenaufwand für das erfindungsgemäße Netz reduziert. Ein weiterer Vorteil besteht darin, daß durch die Ausbildung der rutschhemmenden Mittel als Stränge die Berührungsfläche des Netzes mit den zu schützenden Gütern verkleinert ist, so daß Riefen, Kratzer oder derglichen vermieden werden.

In einer vorteilhaften Weiterbildung der Erfindung sind die rutschhemmenden Stränge nur im Bereich der Stränge des Trägernetzes angeordnet. Dadurch ist die Berührungsfläche des rutschhemmenden Netzes mit den zu schützenden Gütern weiter reduziert. Kaum vermeidbare Schmutzpartikelchen können so leichter durch die großen Maschen des Trägernetzes hindurchfallen bzw. liegen frei und unkritisch im Breich der Maschen. Vorteilhafterweise sind die rutschhemmenden Stränge nur bereichsweise auf dem Trägernetz angeordnet. Dadurch wird der Materialbedarf zur Herstellung des erfindungsgemäßen Netzes sowie die Berührungsfläche weiter reduziert.

Das Verfahren zur Herstellung des Netzes weist die Maßnahmen des Anspruchs 7 auf. Durch die Herstellung der rutschhemmenden Stränge und des Trägernetzes durch Doppelextrusion und das Verbinden der rutschhemmenden Stränge mit dem Trägernetz im warmen Zustand durch Kalandrieren ist eine einfache und kostengünstige Herstellung möglich.

Ein weiteres erfindungsgemäßes Netz zur Lösung der obengenannten Aufgabe weist die Merkmale des Anspruchs 9 auf. Der wellenförmige Verlauf des Netzes bietet einerseits wirksamen Schutz bei übereinandergestapelten Gütern. Andererseits verhindert das wellenförmige Netz bei nebeneinanderliegenden Gütern ein Verrutschen derselben. Durch die Netzstruktur wird die Berührungsfläche an den zu schützenden Gütern klein gehalten, so daß Schmutzpartikelchen, durch die empfindliche Oberflächen der Güter beschädigt werden können, durch das Netz hindurchfallen.

Ein Verfahren zur Herstellung des Netzes nach Anspruch 9 weist die Maßnahmen des Anspruchs 12 auf. Dadurch, daß das Netz während des Extrusionsvorgangs im noch plastischen Zustand in die Wellenform gebracht wird, wird ein zusätzlicher Arbeitsgang eingespart.

Ein weiteres erfindungsgemäßes Netz zur Lösung der Aufgabe weist die Merkmale des Anspruchs 14 auf. Dadurch, daß auf mindestens einer Seite des Trägernetzes Vorsprünge angeordnet sind, wird ein Verrutschen der Güter in seitlicher Richtung verhindert, da sich die Güter durch ihr Eigengewicht rutschfest in dem Netz einbetten.

In einer vorteilhaften Weiterbildung bestehen die Vorsprünge aus rutschhemmendem Material. Dadurch ist ein wirksamer Schutz bei übereinander gestapelten Gütern vor gegenseitigen Beschädigungen gewährleistet, wobei gleichzeitig das Verrutschen der Güter in seitlicher Richtung gegeneinander verhindert wird.

Weitere Merkmale der Erfindung und deren Vorteile ergeben sich aus den Unteransprüchen und der Figurenbeschreibung.

Bevorzugte Ausführungsbeispiele der Erfindung werden nachfolgend anhand der Zeichnung näher erläutert werden. In dieser zeigen:
- Fig. 1: ein erstes Ausführungsbeispiel eines rutschhemmenden Netzes in Draufsicht,
- Fig. 2: das Netz gemäß der Fig. 1 im Schnitt II,
- Fig. 3: ein zweites Ausführungsbeispiel eines rutschhemmenden Netzes in Draufsicht,
- Fig. 4: ein drittes Ausführungsbeispiel eines rutschhemmenden Netzes in Draufsicht,
- Fig. 5: ein viertes Ausführungsbeispiel eines rutschhemmenden Netzes in Draufsicht,
- Fig. 6: das Netz gemäß Fig. 5 im Schnitt VI,
- Fig. 7: das Netz gemäß Fig. 6 mit nebeneinander gelagerten Gütern,
- Fig. 8: ein fünftes Ausführungsbeispiel eines rutschhemmenden Netzes in Draufsicht,
- Fig. 9: das Netz gemäß Fig. 8 im Schnitt IX und
- Fig. 10: ein sechstes Ausführungsbeispiel eines rutschhemmenden Netzes in Seitenansicht.

Die gezeigten Netze dienen zum Schutz von Gütern mit empfindlicher Oberfläche während des Transports bzw. während der Lagerung.

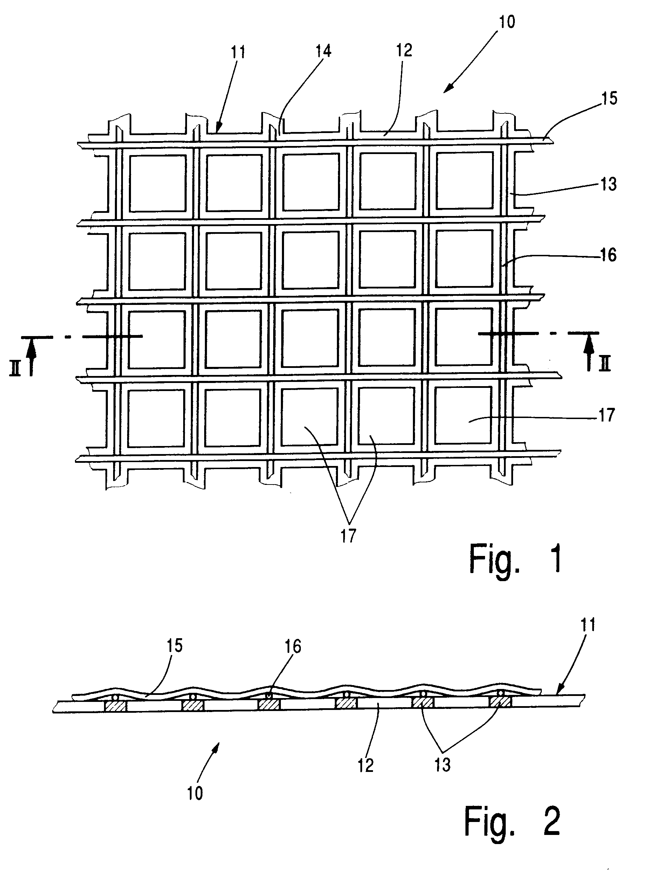

Das Ausführungsbeispiel gemäß Fig. 1 zeigt ein Netz 10, das aus einem Trägernetz 11 und rutschhemmenden Mitteln gebildet ist. Das Trägernetz 11 ist aus sich kreuzenden Strängen 12, 13 gebildet. Die Stränge 12, 13 sind im vorliegenden Beispiel senkrecht zueinander angeordnet und in ihren Kreuzungsstellen 14 fest miteinander verbunden. Auf einer Seite des Trägernetzes 11 sind die als Stränge 15, 16 ausgebildeten rutschhemmenden Mittel aufgebracht.

Die rutschhemmenden Stränge 15, 16 sind auf dem Trägernetz 11 in unterschiedlichen Richtungen angeordnet, derart, daß sie senkrecht zueinander entsprechend dem Verlauf der Stränge 12, 13 des Trägernetzes 11 auf dieselben aufgebracht sind. Dabei erstrecken sich die rutschhemmenden Stränge 15, 16 nur im Bereich der Stränge 12, 13 des Trägernetzes 11, so daß Maschen 17 des Netzes 10 vollständig frei bzw. durchlässig sind. Die rutschhemmenden Stränge 15, 16 erstrecken sich jeweils nur über einen Teil der Breite der Stränge 12, 13 des Trägernetzes 11. Die rutschhemmenden Stränge 16 sind auf den Strängen 13, die rutschhemmenden Stränge 15 auf den Strängen 12 des Trägernetzes 11 angeordnet, wobei die Stränge 15 im Bereich der Kreuzungstellen 14 oberhalb der Stränge 16 verlaufen.

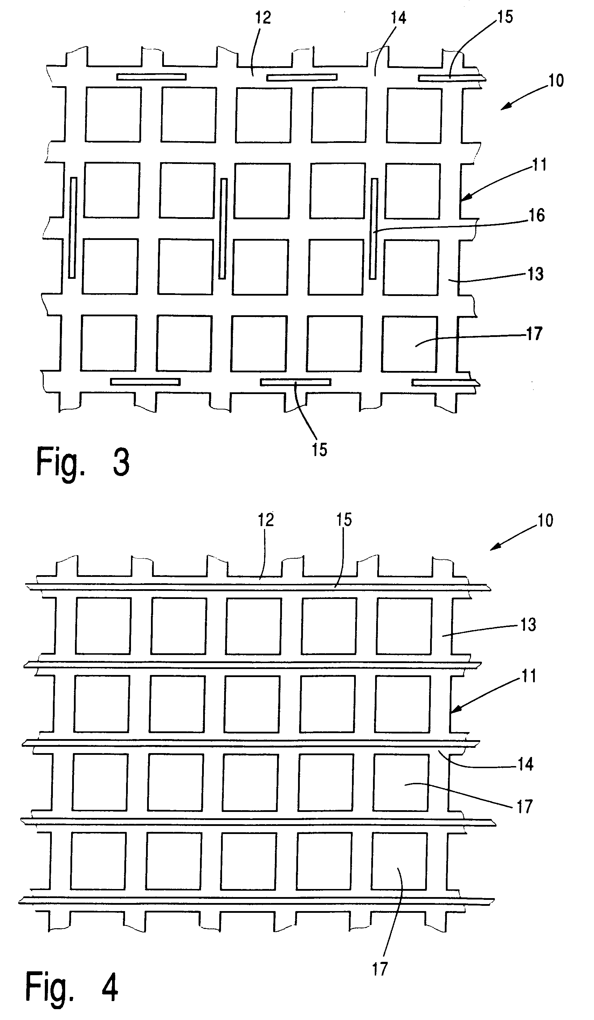

Beim Ausführungsbeispiel gemäß Fig. 3 sind die rutschhemmenden Stränge 15, 16 nur bereichsweise, nämlich als unterbrochene Stränge, ausgebildet. Es sind aber auch punktförmige oder beliebige andere Ausführungsformen der Stränge 15, 16 denkbar.

In einem Ausführungsbeispiel gemäß Fig. 4 sind die rutschhemmenden Stränge 15 nur in einer Richtung auf dem Trägernetz 11 aufgebracht.

Alternativ ist es auch möglich, daß die rutschhemmenden Stränge 15, 16 auf beiden Seiten des Trägernetzes 11 in einer und/oder in beiden Richtungen angeordnet sind. Alle Ausführungsbeispiele, auch die nicht gezeigten, können auch so ausgebildet sein, daß nicht auf jedem Strang 12, 13 des Trägernetzes 11, wie in Fig. 3 gezeigt, aber beispielsweise auf jedem zweiten Strang 12, 13 oder auf Teilbereichen der Stränge 12, 13 die rutschhemmenden Stränge aufgebracht sind.

Das Trägernetz 11 und die rutschhemmenden Stränge 15, 16 bestehen aus unterschiedlichem Material. Das Trägernetz 11 besteht aus einem Kunststoff, der keine rutschhemmenden Eigenschaften aufzuweisen braucht, beispielsweise Polypropylen oder Polyethylen. Es sind aber auch andere Materialien verwendbar. Die rutschhemmenden Stränge 15, 16 bestehen aus rutschhemmendem Material, beispielsweise Kautschuk oder thermoplastischen Elastomeren. Es können die rutschhemmenden Stränge 15, 16 und die Stränge 12, 13 des Trägernetzes 11 aber auch aus demselben Material bestehen.

Bei der Herstellung des erfindungsgemäßen Netzes 10 werden die rutschhemmenden Stränge 15, 16 und die Stränge 12, 13 des Trägernetzes 11 durch Doppelextrusion separat extrudiert und im noch warmen Zustand z.B. durch Kalandrieren miteinander verbunden. Es ist auch möglich, die rutschhemmenden Stränge 15, 16 durch Kleben, Aufkaschieren oder dergleichen mit dem Trägernetz 11 zu verbinden. Die Netze 10 werden bevorzugt in großflächigen Netzbahnen hergestellt und bei der Extrusion so geformt, daß sie leicht handhabar sind.

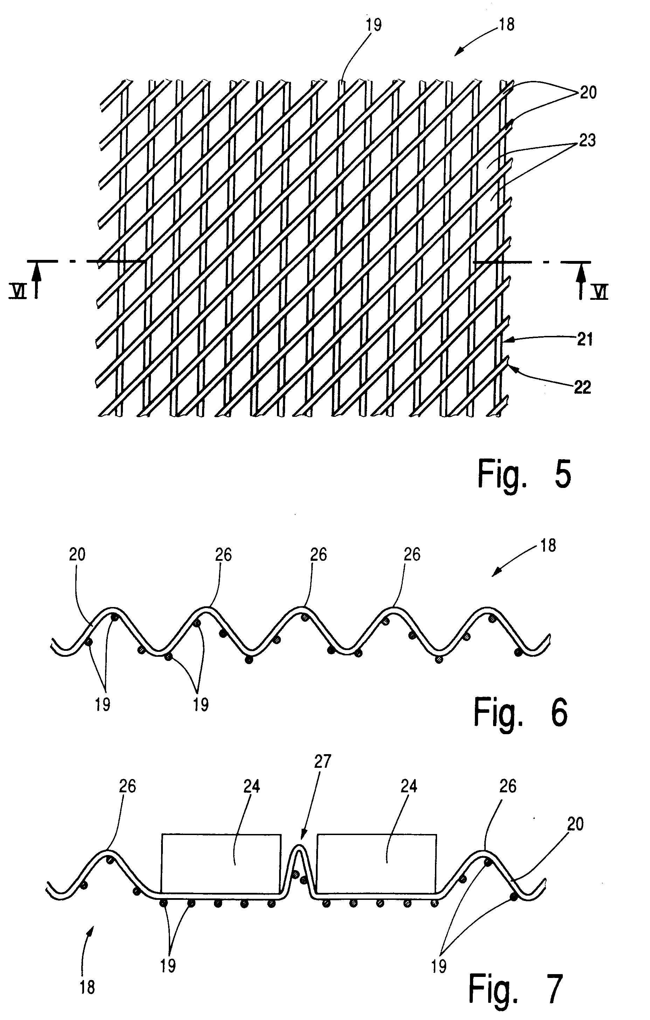

Die Fig. 5 zeigt ein Netz 18 mit sich kreuzenden Strängen 19, 20. Das Netz 18 weist einen wellenförmigen Verlauf auf und ist zweilagig aufgebaut. Eine erste Lage 21 besteht aus den parallel zueinander verlaufenden Strängen 19. Eine zweite Lage 22 besteht aus ebenfalls parallel zueinander verlaufenden Strängen 20, wobei die Stränge 20 der zweiten Lage 22 diagonal zu den Strängen 19 der ersten Lage 21 angeordnet sind. Die Stränge 19 der im gezeigten Ausführungsbeispiel unteren Lage 21 sind gradlinig bzw. eben ausgebildet. Nur die Stränge 20 der im gezeigten Ausführungsbeispiel oberen Lage 22 weisen einen wellenförmigen Verlauf auf. Es ist aber auch möglich, daß alle Stränge 19, 20 in einer Lage angeordnet sind, wobei dann nur die in einer Richtung parallel zueinander verlaufenden Stränge wellenförmig ausgebildet sind.

Derartige wellenförmige Netze 18 dienen beispielsweise als Zwischenlage zum Schutz für Güter mit empfindlicher Oberfläche, zum Beispiel Glasscheiben. Durch die Netzstruktur wird die Berührungsfläche an den zu schützenden Glasscheiben klein gehalten. Durch die netzartige Struktur können Schmutzpartikelchen durch Maschen 23 des Netzes 18 hindurchfallen.

Das Netz 18 hat durch die Wellenform gute Federungseigenschaften und bietet dadurch eine gute Polsterung für übereinander gelagerte Güter. Durch das Gewicht der Güter verliert das Netz 18 im Bereich der aufliegenden Güter ihre Wellenform. Im entlasteten Zustand formt sich das Netz 18 in ihre ursprüngliche, wellenförmige Gestalt zurück.

Das Netz 18 dient beispielsweise auch als Schutz für Glasscheiben, die stehend oder leicht geneigt gelagert und/oder transportiert werden. Die Glasscheiben und die als Zwischenlagen verwendeten Netze 18 sind dabei im Wechsel nebeneinander angeordnet.

Die wellenförmige Kontur des Netzes 20 verhindert jedoch auch das Verrutschen von nebeneinanderliegenden Gütern. Hochwertige Güter, beispielsweise Zahnräder mit empfindlicher Oberfläche, können rutschfest auf dem Netz 18 gelagert werden. Durch die Wellenform des Netzes 18 "verhaken" sich die Güter quasi in den Maschen 23 und sind so gegen seitliches Verschieben gesichert.

Die Stränge 19, 20 beider Lagen 21, 22 bestehen aus thermoplastischen Kunststoffen, wie z.B. Polyethylen. Alternativ kann das Netz 18 auch aus anderen Materialien, auch rutschhemmenden Materialien, bestehen.

Die Dicke des unbelasteten Netzes 18 beträgt ca. 10 mm. Durch das Eigengewicht der auf dem Netz gelagerten Güter 24 wird das Netz 18 in diesem Bereich in eine flache Ebene gedrückt (Fig. 7). Bei nebeneinanderliegenden Gütern 24 bildet sich durch die Wellenform des Netzes 18 zwischen den gelagerten Gütern 24 eine Art Zwischenwand 25. Diese Zwischenwand 25 wird aus einem zusammengeschobenen Wellenberg 26 gebildet. Durch die Zwischenwand 25 wird einerseits das seitliche Verrutschen der Güter 24 verhindert. Andererseits sind die nebeneinander gelagerten Güter 24 durch die Zwischenwand 25 vor gegenseitiger Beschädigung geschützt.

Das Netz 18 wird während des Extrusionsvorgangs im plastischen Zustand in die Wellenform gebracht. Es ist aber auch denkbar, die Wellenform des Netzes 18 in einem separaten, nachfolgenden Arbeitsgang durch Nachformen, insbesondere Tiefziehen, Prägen oder dergleichen, zu erzeugen.

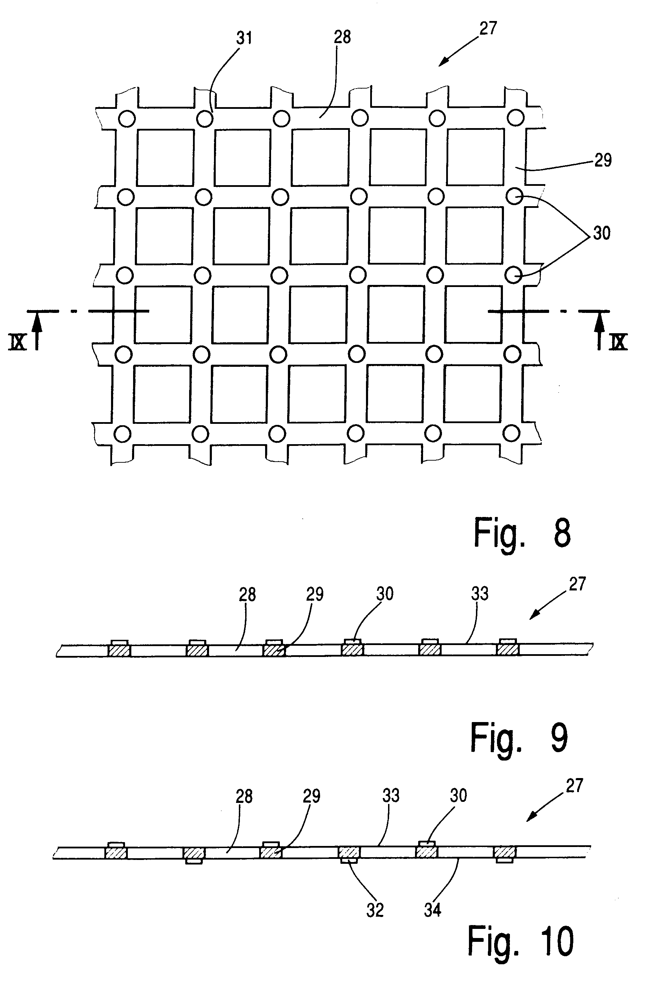

Die Fig. 8 zeigt ein Netz 27 aus sich kreuzenden Strängen 28, 29. Auf einer Seite des Netzes 27 sind Vorsprünge 30 angeordnet. Die im vorliegenden Ausführungsbeispiel vorzugsweise rund ausgebildeten Vorsprünge 30 sind in Kreuzungspunkten 31 der Stränge 28, 29 des Netzes 27 angeordnet.

Das Ausführungsbeispiel gemäß Fig. 10 zeigt das Netz 27, bei dem Vorsprünge 30, 32 zu beiden Seiten angeordnet sind. Die Vorsprünge 30 einer Oberseite 33 des Netzes 27 sind dabei versetzt zu den Vorsprüngen 32 einer Unterseite 34 angeordnet.

Die Vorsprünge 30, 32 und die Stränge 28, 29 des Netzes 27 sind aus dem gleichen Material, vorzugsweise thermoplastischen Kunststoffen wie Polyethylen, hergestellt. Die Vorsprünge 30, 32 weisen einen Durchmesser von etwa 20 bis 30 mm und eine Dicke von etwa 15 mm auf. Die gestapelten Güter betten sich dann in das Netz 27 zwischen den Vorsprüngen 30, 32 durch Ihr Eigengewicht ein und sind somit gegen Verrutschen bzw. seitliches Verschieben geschützt.

In einem nicht dargestellten Ausführungsbeispiel bestehen das Netz 27 und die Vorsprünge 30, 32 aus unterschiedlichem Material, wobei das Netz 27 aus Polyethylen oder dergleichen und die Vorsprünge 30, 32 aus einem rutschhemmenden Material bestehen.

In den vorliegenden Ausführungsbeispielen der Netze weisen die Stränge runde und/oder rechteckige Querschnitte auf. Die Stränge mit rundem Querschnitt können jedoch je nach Anwendungsfall auch rechteckige, quadratische, dreieckige oder beliebige andere Querschnitte aufweisen. Umgekehrt können die Stränge mit rechteckigem Querschnitt auch runde, quadratische, dreieckige oder beliebige andere Querschnitte aufweisen.

Bei mehrlagigen Netzen können die Querschnitte unterschiedlicher Lagen verschiedenartig ausgebildet sein, wobei die Stränge einer Lage jeweils gleichartige Querschnitte aufweisen. Dadurch weist das Netz zwei Seiten mit jeweils unterschiedlicher Oberflächenstruktur auf.

### Bezugszeichenliste:

- 10: Netz
- 11: Trägernetz
- 12: Strang (Trägernetz)
- 13: Strang (Trägernetz)
- 14: Kreuzungsstelle
- 15: Strang
- 16: Strang
- 17: Masche
- 18: Netz
- 19: Strang
- 20: Strang
- 21: Lage
- 22: Lage
- 23: Masche
- 24: (Transport-)Gut
- 25: Zwischenwand
- 26: Wellenberg
- 27: Netz
- 28: Strang
- 29: Strang
- 30: Vorsprünge
- 31: Kreuzungspunkt
- 32: Vorsprünge
- 33: Oberseite
- 34: Unterseite

## Patentansprüche

1. Netz, insbesondere Oberflächenschutznetz, Rutschhemmnetz, Abstandshalternetz oder dergleichen, mit mindestens einem Trägernetz (11) aus sich kreuzenden Strängen (12, 13) und mit dem Trägernetz (11) verbundenen, rutschhemmenden Mitteln, **dadurch gekennzeichnet**, daß die rutschhemmenden Mittel als mindestens auf einer Seite des Trägernetzes (11) aufgebrachte Stränge (15, 16) ausgebildet sind.

2. Netz nach Anspruch 1, dadurch gekennzeichnet, daß die rutschhemmenden Stränge (15, 16) mindestens in einer Richtung auf dem Trägernetz (11) aufgebracht sind.

3. Netz nach Anspruch 1 oder 2, dadurch gekennzeichnet, daß die rutschhemmenden Stränge (15, 16) auf dem Trägernetz (11) in zwei unterschiedlichen Richtungen, vorzugsweise senkrecht zueinander, angeordnet sind.

4. Netz nach einem der vorhergehenden Ansprüche, dadurch gekennzeichnet, daß die rutschhemmenden Stränge (15, 16) auf beiden Seiten des Trägernetzes (11) angeordnet sind.

5. Netz nach einem der vorhergehenden Ansprüche, dadurch gekennzeichnet, daß das Trägernetz (11) und die rutschhemmenden Stränge (15, 16) aus unterschiedlichem Material bestehen, insbesondere das Trägernetz (11) aus Polypropylen, Polyethylen oder dergleichen und die rutschhemmenden Stränge (15, 16) aus Kautschuk, thermoplastischen Elastomeren oder dergleichen bestehen.

6. Netz nach einem der vorhergehenden Ansprüche, dadurch gekennzeichnet, daß die rutschhemmenden Stränge (15, 16) nur bereichsweise auf den Strängen (12, 13) des Trägernetzes (11) angeordnet sind.

7. Verfahren insbesondere zur Herstellung des Netzes nach einem der vorhergehenden Ansprüche, dadurch gekennzeichnet, daß die rutschhemmenden Stränge (15, 16) und das Trägernetz (11) durch Doppelextrusion separat voneinander hergestellt werden, wobei die rutschhemmenden Stränge (15, 16) und das Trägernetz (11) im warmen Zustand durch Kalandrieren oder dergleichen miteinander verbunden werden.

8. Verfahren nach Anspruch 7, dadurch gekennzeichnet,daß die rutschhemmenden Stränge (15, 16) durch Kleben, Aufkaschieren oder dergleichen mit dem Trägernetz (11) verbunden werden.

9. Netz, insbesondere Oberflächenschutznetz, Rutschhemmnetz, Abstandshalternetz oder dergleichen, mit sich kreuzenden Strängen (19, 20), gekennzeichnet durch einen wellenförmigen Verlauf.

10. Netz nach Anspruch 9, dadurch gekennzeichnet, daß nur die in einer Richtung parallel zueinander verlaufenden Stränge (20) einen wellenförmigen Verlauf aufweisen.

11. Netz nach einem der vorhergehenden Ansprüche, dadurch gekennzeichnet, daß alle Stränge (19, 20) aus dem gleichen Material bestehen, insbesondere aus Polyethylen oder anderen thermoplastischen Kunststoffen.

12. Netz nach einem der vorhergehenden Ansprüche, dadurch gekennzeichnet, daß die Stränge (19, 20) im Querschnitt rund, rechteckig oder dergleichen ausgebildet sind.

13. Verfahren insbesondere zur Herstellung des Netzes nach Anspruch 9, dadurch gekennzeichnet, daß das Netz (18) während des Extrusionsvorgangs im plastischen Zustand in die Wellenform gebracht wird.

14. Verfahren nach Anspruch 13, dadurch gekennzeichnet, daß die Wellenform des Netzes (18) in einem separaten Arbeitsgang durch Nachformen erzeugt wird.

15. Netz, insbesondere Oberflächenschutznetz, Rutschhemmnetz, Abstandshalternetz oder dergleichen, mit mindestens einem Netz (27) aus sich kreuzenden Strängen (28, 29), dadurch gekennzeichnet, daß auf mindestens einer Seite des Netzes (27) Vorsprünge (30) angeordnet sind.

16. Netz nach Anspruch 15, dadurch gekennzeichnet, daß die Vorsprünge (30, 32) zu beiden Seiten des Netzes (27) angeordnet sind.

17. Netz nach Anspruch 16, dadurch gekennzeichnet, daß die Vorsprünge (30) einer (Ober-)seite (33) des Netzes (27) versetzt zu den Vorsprüngen (32) einer (Unter-)seite (34) des Netzes (27) angeordnet sind.

18. Netz nach einem der vorhergehenden Ansprüche, dadurch gekennzeichnet, daß die Vorsprünge (30, 32) in Kreuzungspunkten (31) der Stränge (28, 29) des Netzes (27) angeordnet sind.

19. Netz nach einem der vorhergehenden Ansprüche, dadurch gekennzeichnet, daß das Netz (27) und die Vorsprünge (30, 32) aus dem gleichen Material, insbesondere Polyethylen oder dergleichen, bestehen.
